(19) **Europäisches Patentamt**
**European Patent Office**
**Office européen des brevets**

(11) **EP 1 747 533 B1**

(12) **EUROPÄISCHE PATENTSCHRIFT**

(45) Veröffentlichungstag und Bekanntmachung des Hinweises auf die Patenterteilung:
**16.11.2011 Patentblatt 2011/46**

(51) Int Cl.:
***G06T 5/00*** *(2006.01)*

(21) Anmeldenummer: **05744534.8**

(86) Internationale Anmeldenummer:
**PCT/EP2005/005459**

(22) Anmeldetag: **19.05.2005**

(87) Internationale Veröffentlichungsnummer:
**WO 2005/114573 (01.12.2005 Gazette 2005/48)**

(54) **VERFAHREN UND VORRICHTUNG ZUR INTERPOLATION UND KORREKTUR EINES BILDES**

METHOD AND DEVICE FOR INTERPOLATION AND CORRECTION OF AN IMAGE

PROCÉDÉ ET DISPOSITIF D'INTERPOLATION ET DE CORRECTION D'UNE IMAGE

(84) Benannte Vertragsstaaten:
**DE DK FR GB NL**

(30) Priorität: **19.05.2004 DE 102004024855**

(43) Veröffentlichungstag der Anmeldung:
**31.01.2007 Patentblatt 2007/05**

(73) Patentinhaber: **OCÉ Printing Systems GmbH**
**85586 Poing (DE)**

(72) Erfinder: **FREI, Bernhard**
**78465 Konstanz (DE)**

(74) Vertreter: **Schaumburg, Thoenes, Thurn,**
**Landskron, Eckert**
**Patentanwälte**
**Postfach 86 07 48**
**81634 München (DE)**

(56) Entgegenhaltungen:
**EP-A- 0 450 335     EP-A- 1 041 510**
**US-A- 5 301 266     US-A- 5 880 767**
**US-B1- 6 501 484     US-B1- 6 714 688**

- **PATENT ABSTRACTS OF JAPAN Bd. 2000, Nr. 15, 6. April 2001 (2001-04-06) -& JP 2000 353241 A (RISO KAGAKU CORP), 19. Dezember 2000 (2000-12-19)**
- **GOLDFARB D ET AL: "Robust convex quadratically constrained programs" MATHEMATICAL PROGRAMMING, NORTH-HOLLAND, AMSTERDAM,, NL, Bd. 97, Nr. 3, 1. August 2003 (2003-08-01), Seiten 495-515, XP002330564 ISSN: 0025-5610 in der Anmeldung erwähnt**

**Beschreibung**

Die vorliegende Erfindung betrifft ein Verfahren und eine Vorrichtung zur Interpolation und Korrektur eines Bildes.

Bei einem als computerlesbare Datei vorliegenden digitalen Bild besteht oft die Notwendigkeit, das Bild in einer anderen Auflösung bereit zu stellen als es ursprünglich vorliegt. Dies gilt insbesondere bei mittels einem Scanner eingescannten Bild, das oftmals in einer anderen Auflösung ausgegeben werden soll, wie es durch die Optik und den Sensor des Scanners erfasst worden ist.

Zudem ist die optische Abbildung durch die reale Optik (Objektiv) auf einen Sensor mit einer Reihe von Unzulänglichkeiten verbunden, die sowohl durch die Optik, den Sensor, der nachfolgenden analogen Verstärkung und des nicht-idealen Abtasters verursacht werden. Bei anspruchsvollen Scannern werden mit bekannten Verfahren diese Abweichungen korrigiert. Zur Korrektur des Bildes ist es bekannt, FIR-Filter (FIR: Finite Impulse Response), IIR-Filter (IIR: Infinite Impulse Response) und nicht-lineare Filter wie Pruning oder MedianFilter zu verwenden. Nicht-lineare Filterverfahren sind weniger zur Korrektur des optischen/elektronischen Aufnahmesystems geeignet, als zur Beseitigung von lokalen Störungen, wie zum Beispiel Kratzer in der Vorlage.

Die Veränderung der Auflösung eines Bildes wird mittels Interpolationsverfahren ausgeführt. Die am häufigsten eingesetzten Interpolationsverfahren sind bilineare Interpolation, biquadratische Interpolation und zweidimensionale Interpolation mit B-Splines.

Bei anspruchsvollen Scannern wird zunächst ein erfasstes Bild mittels einer Interpolation in die gewünschte Auflösung transformiert und danach eine Korrektur des Bildes durchgeführt. Die Interpolation kann hierbei auch in mehreren Schritten ausgeführt werden, um zum Beispiel das Bild zunächst zu entzerren und dann die Auflösung zu verändern.

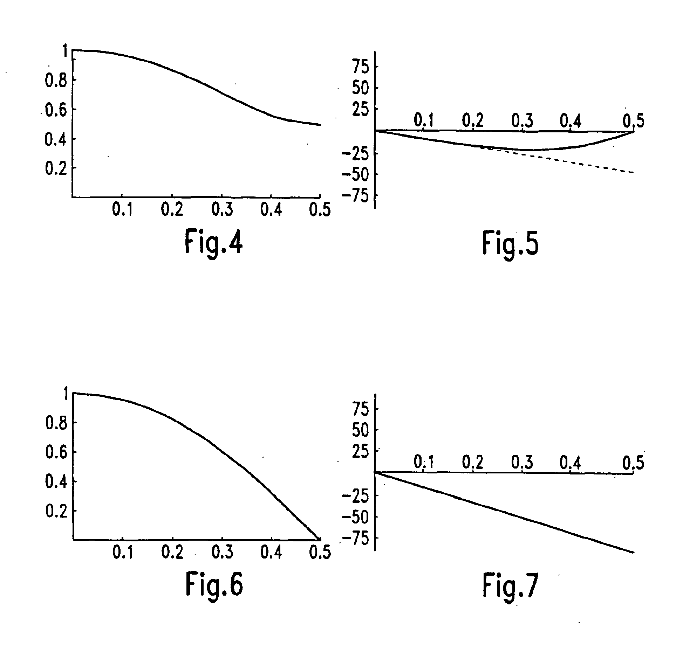

Anhand der Figuren 4 - 7 wird nachfolgend die Auswirkung herkömmlicher Interpolationsverfahren auf ein Bild in der Darstellung im Frequenzraum erläutert. Im Frequenzraum wird ein Bild entlang einer Linie durch Schwingungen dargestellt. Figur 4 zeigt den Einfluss der bilinearen Interpolation bei einer Verschiebung von dx=0,25 Pixel, womit ¼ des Abstandes zwischen zwei Pixel gemeint ist. Auf der Abszisse ist die normierte Ortsfrequenz bis zur Nyquist-Grenze (bei 0,5) aufgetragen. Die Nyquist-Frequenz ist die Ortsfrequenz, die entlang einer Linie aufeinander folgend schwarze und weiße Bildpunkte darstellt. Man erkennt, dass je größer die Ortsfrequenz wird, desto stärker die Amplitude abnimmt (Figur 4). Dies bedeutet, dass bei der bilinearen Interpolation bei einer Verschiebung von dx=0,25 feine Kontraste, d.h. eng nebeneinander liegende Linien, geschwächt werden. Eine Verschiebung von dx=0,25 wird z.B. häufig bei der Umsetzung eines Bildes von 300 DPI auf 233 DPI angewandt.

In Figur 5 ist der Phasenverlauf über die normierte Frequenz für eine Verschiebung von dx=0,25 dargestellt. Für eine optimale Interpolationsfunktion, die eine Bildverschiebung um ein ¼ Pixel durchführen soll, müsste die Phasenverschiebung über die Frequenz eine Gerade ergeben, die durch den Ursprung geht und bei der Nyquist-Frequenz einen Wert von 45° hat. Diese Sollfunktion ist in Figur 5 gestrichelt dargestellt. Der Phasenfehler beträgt bei der halben Nyquist-Grenze 4,5°, d.h. 2,5 % bezogen auf die Pixellänge, und steigt dann bis zur Nyquist-Frequenz stark an.

Figur 6 und 7 zeigen die entsprechenden Diagramme für eine Interpolation von dx=0,5 Pixel. Aus Figur 6 kann man entnehmen, dass bei einer Interpolation von dx=0,5 Pixel die Amplitude noch stärker gedämpft wird. Ein Phasenfehler tritt bei dieser Interpolation hingegen nicht auf (Figur 7).

Bei einer biquadratischen Interpolation bzw. bei einer Splines-Interpolation sind die Fehler geringer als bei einer bilinearen Interpolation. Jedoch gilt für alle herkömmlichen Interpolationsverfahren, dass Amplituden- und Phasenfehler entstehen, die von dem Betrag der Verschiebung abhängig sind. Da für beliebige Interpolationen die notwendige Verschiebung über das Bild variieren, sind diese Fehler im interpolierten Bild örtlich unterschiedlich ausgeprägt.

Aus der US 5,301,266 geht ein Verfahren hervor, bei dem ein Bild zunächst im Frequenzraum gefiltert wird und das Bild danach in den Ortsraum übertragen wird, in dem eine Interpolation ausgeführt wird.

Aus der EP 1 041 510 A2 geht ein Verfahren und ein System hervor, mit welchen ein Signal bearbeitet werden soll, das eine Störung im Bereich ihrer Hochfrequenzkomponenten aufweisen soll. Derartige Störungen werden insbesondere bei einer linearen Interpolation verursacht. Zur Korrektur solcher Störungen, insbesondere bei der Bearbeitung von Bildern, werden kleine 2-dimensionale FIR-Filter verwendet, insbesondere inverse Filter, die eine durch die Interpolation hervorgerufene Tiefpasscharakteristik korrigieren. Für die einzelnen Interpolationsschritte werden unterschiedliche Filter verwendet, die vorab berechnet und in Filterbänke gespeichert werden. Ein jeder solcher Filter korrigiert die Störung im Frequenzgang, die durch die vorhergehende Interpolation verursacht worden ist.

Diese bekannten Verfahren zur Änderung der Auflösung und Korrektur eines digitalen Bildes sind nicht in der Lage, diese Fehler mit hoher Qualität auszugleichen, da die dazu notwendige Information nach einem Interpolationsschritt nicht mehr zur Verfügung steht. Da die Interpolationsfehler bereichsweise sehr beträchtlich sind, weisen die herkömmlichen Verfahren erhebliche Mängel auf, die nicht korrigierbar sind.

Aus COURMONTAGEN, P.; CAVASSILAS, J.F.; "An interpolationfiltering method for noise-corrupted images" aus Digital Signal Processing, 1997, Volume 2, Seite 1091-1094 geht ein Verfahren zum gleichzeitigen Interpolieren und Filtern von Bildern hervor. Hierbei wird das Bild mittels einer Fouriertransformation in den Frequenzraum transformiert. Im Frequenzraum kann sowohl die Filterung als auch die Interpolation durch jeweils eine multiplikative Operation ausgeführt werden, so dass beide Operationen, die Filterung und die Interpolation, gleichzeitig ausführbar sind. Da man sich bei dieser Operation jedoch im Frequenzraum befindet, müssen diese Operationen jeweils über das gesamte Bild ausgeführt werden. Bei Bildern mit einer Bildgröße von 256x256 Bildpunkten ist so eine Operation mit herkömmlichen Computern ohne weiteres möglich. Bei größeren Bildformaten ist es selbst mit leistungsstarken Personal-Computern nicht möglich, dies in kurzer Zeit auszuführen. Jedenfalls kann dieses Verfahren im Frequenzraum nicht dazu benutzt werden, in Echtzeit Bilder gleichzeitig zu interpolieren und zu filtern. Die allgemeinen Prinzipien der Fouriertransformation, auf welcher dieses Verfahren beruht, sind in IWAINSKY A., WILHELMI W. Lexikon der Computergrafik und Bildverarbeitung, Vieweg Verlagsgesellschaft, 1994, auf Seite 108 erläutert.

Der Erfindung liegt die Aufgabe zugrunde, ein Verfahren zur Änderung der Auflösung und Korrektur eines digitalen Bildes zu schaffen, das nicht den oben beschriebenen Nachteilen unterliegt und zugleich sehr einfach und schnell ausführbar ist, so dass es auch in einer einfachen kostengünstigen Hardware-Schaltung realisierbar ist.

Die Erfindung wird durch ein Verfahren mit den Merkmalen des Anspruchs 1 und durch eine Vorrichtung mit den Merkmalen des Anspruchs 8 gelöst. Vorteilhafte Ausgestaltungen der Erfindung sind in den Unteransprüchen angegeben.

Gemäß dem erfindungsgemäßen Verfahren zur Interpolation und Korrektur eines digitalen Bildes wird ein Quellbild auf ein Zielbild mit einem FIR-Filter abgebildet, der mehrere Filterkoeffizienten umfasst. Die Filterkoeffizienten enthalten sowohl die Information zur Interpolation als auch zur Korrektur des Bildes, so dass in einem einzigen Schritt sowohl die Interpolation als auch die Korrektur des Bildes ausgeführt wird.

Da erfindungsgemäß ein einziger Filter verwendet wird, mit dem in einem Schritt sowohl eine Interpolation zur Veränderung der Auflösung als auch eine Korrektur ausgeführt wird, sind sowohl für die Änderung der Auflösung als auch für die Frequenzkorrektur alle ursprünglichen Informationen vorhanden und gehen in die Berechnung ein, so dass keine Folgefehler auftreten, wie sie von den herkömmlichen Verfahren bekannt sind. Dies betrifft Fehler durch die Interpolation als auch Rundungsfehler.

Durch die Verwendung eines FIR-Filters können die Berechnungen im Ortsraum in einer Richtung entlang horizontalen oder vertikalen Linien des Bildes erfolgen, da FIR-Filter separierbar sind. Dies erlaubt sowohl eine sehr schnelle Ausführung des erfindungsgemäßen Verfahrens mit einer Software-Lösung als auch eine einfache und kostengünstige Hardware-Implementation.

Das erfindungsgemäße Verfahren lässt sich einfach als Hardware-Schaltung realisieren (Anspruch 9).

Nachfolgend wird die Erfindung näher anhand der Zeichnung beispielhaft erläutert. Die Zeichnung zeigt in:

| Figur 1 | schematisch die Abbildung eines Bildpunktes des Quellbildes auf ein Zielbild mittels einer Filterberechnung entsprechend einer mathematischen Faltung, |
|---|---|
| Figur 2 | eine beispielhafte Übertragungsfunktion zur Korrektur eines eingescannten digitalen Bildes, |
| Figur 3 | eine Tabelle, die in jeder Zeile jeweils einen Satz Filterkoeffizienten für einen erfindungsgemäßen FIR-Filter enthält, wobei die Filter für eine jeweils andere Verschiebung bzw. Interpolation vorgesehen sind, |
| Figur 4 | den Verlauf der Amplitude bei einer herkömmlichen bilinearen Interpolation für eine Verschiebung von dx=0,25, |
| Figur 5 | den Verlauf der Phase für eine Verschiebung von dx=0,25 für eine herkömmliche bilineare Interpolation, |
| Figur 6 | den Verlauf der Amplitude für eine Verschiebung von dx=0,5 für eine herkömmliche bilineare Interpolation, |
| Figur 7 | den Verlauf der Phase für eine Verschiebung von dx=0,5 für eine herkömmliche bilineare Interpolation, |
| Figur 8a, 8b bis 16a, 16b | jeweils den Verlauf der Amplitude bzw. jeder Phase für die Verschiebung von dx=0 bzw. 0,125 bzw. 0,25 bzw. 0,375 bzw. 0,5 bzw. 0,625 bzw. 0,75 bzw. 0,875 bzw. 1, |
| Figur 17 | schematisch ein Blockschaltbild einer Vorrichtung zum Ausführen des erfindungsgemäßen Verfahrens, und |

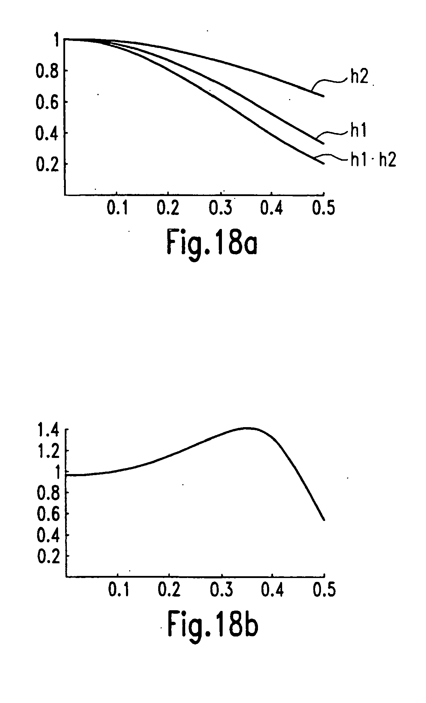

Figur 18a, 18b — eine weitere den Frequenzgang korrigierende Übertragungsfunktion sowie deren Bestandteile.

Der Erfindung liegt folgender Sachverhalt zugrunde:

In der Bildverarbeitung müssen Filter nicht kausal sein. Dies hat zur Folge, dass Amplitude und Phase unabhängig voneinander einstellbar sind.

Mit der Erfindung wird ein linearer diskreter FIR-Filter eingesetzt ("Digitale Bildverarbeitung", 4. Auflage, Bernd Jähne - ISBN 3-540-61379-x, Kapitel 4 Nachbarschafts-operatoren). Die einzelnen Bildpunkte des Zielbildes werden zeilenweise aus den Bildpunkten des Quellbildes berechnet, wobei in die Filterberechnung entsprechend einer mathematischen Faltung eine bestimmte Anzahl von Bildpunkten des Quellbildes eingehen, die symmetrisch um den korrespondierenden Bildpunkt des Quellbildes angeordnet sind, der dem zu berechnenden Bildpunkt des Zielbildes entspricht. Dies wird mit folgender Formel beschrieben:

$$G'_{mn} = \sum_{i=-r}^{r} a_i G_{m,n-i} \qquad (1)$$

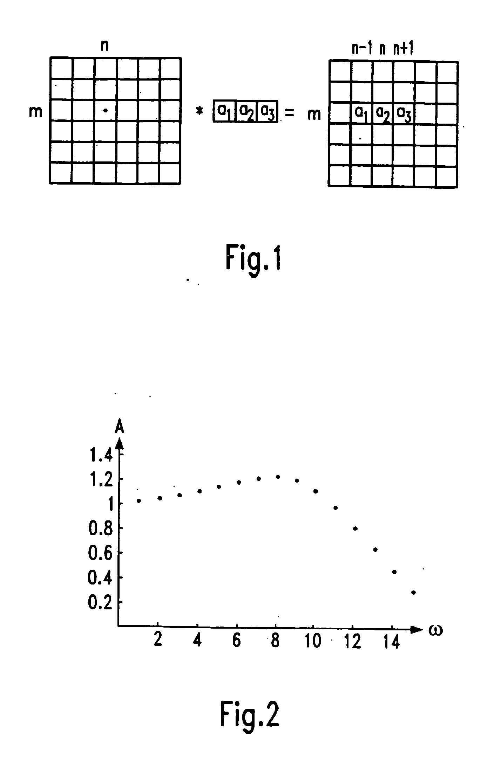

wobei $G'_{mn}$ der Abbildungspunkt G' in der n-ten Spalte und m-ten Zeile, $G_{mn}$ der Bildpunkt des Quellbildes in der n-ten Spalte und m-ten Zeile und $a_i$ die Filterkoeffizienten sind. Dies ist in Fig. 1 schematisch dargestellt, wobei ein Punkt $G_{mn}$ eines Quellbildes mittels eines Filters mit drei Koeffizienten $a_i$ auf einen Punkt $G'_{mn}$ im Zielbild abgebildet wird.

Das Wesen der Erfindung liegt darin, dass die Filterkoeffizienten $a_i$ so gewählt sind, dass sie in einem Rechenschritt sowohl eine Interpolation als auch eine Korrektur des Frequenzganges des Bildes bewirken. Es wird somit lediglich ein Filter eingesetzt, um die Interpolation sowie Frequenzkorrektur durchzuführen.

Nachfolgend wird die Berechnung der Filterkoeffizienten $a_i$ näher erläutert. Hierzu geht man idealerweise von einer kontinuierlichen Übertragungsfunktion $H(\omega)$ aus. Die Übertragungsfunktion $H(\omega)$ dient zur Korrektur des Frequenzganges bei der Abbildung des Quellbildes auf das Zielbild. Diese Übertragungsfunktion wird näherungsweise durch eine Übertragungsfunktion der diskreten Fourier-Transformation $H(\omega)$ ersetzt:

$$H(\omega) \cong \mathbf{H}(\omega) \qquad (2)$$

Im Ortsraum wird das Quellbild durch die kontinuierliche Funktion f(x) in einer Zeile beschrieben. Bei einer Subbildpunktverschiebung dx, d.h. bei einer Verschiebung um eine Distanz dx, die kleiner als der Abstand zweier benachbarter Bildpunkte ist, lautet die Funktion im Ortsraum f(x+dx). Der Übergang vom Ortsraum in den Frequenzraum mittels Fourier-Transformation kann wie folgt dargestellt werden:

$$f(x+dx) \xrightarrow{\quad Fourier \quad} e^{i\omega dx} F(\omega) \qquad (3)$$

wobei $F(\omega)$ die in den Frequenzraum transformierte Funktion von f(x) ist. Dies bedeutet, dass eine Subbildpunktverschiebung im Frequenzraum als Phasenverschiebung um die Phase $i\omega dx$ darstellbar ist und diese Phasenverschiebung bzw. Subbildpunktverschiebung als Produkt aus der nicht-verschobenen Funktion $F(\omega)$ und dem Phasenkoeffizienten $e^{i\omega dx}$ dargestellt wird. Diese Phasen- bzw. Subbildpunktverschiebung bildet eine Interpolation, da hierdurch der Wert zwischen zwei Bildpunkten bestimmt wird. Dies hat für die Übertragungsfunktion daher zur Folge, dass sie zur Darstellung der Interpolation lediglich mit der Phasenkomponente multipliziert werden muss:

$$H_{dx}(\omega) = H(\omega) \cdot e^{i\omega dx} \qquad (4)$$

Diese Formel erleichtert die Ausführung der Erfindung wesentlich, da sie zeigt, dass im Frequenzraum die Übertragungsfunktion H(ω) und die Phasenverschiebung bzw. Interpolation $e^{i\omega dx}$ zwei unabhängige Faktoren eines Produktes sind, die unabhängig voneinander bestimmbar sind.

Die Übertragungsfunktion des FIR-Filters $H_{FIR}$ kann im Frequenzraum mittels einer Fourier-Reihe wie folgt dargestellt werden:

$$H_{FIR} = \sum_{n=1}^{m} a_n e^{-i\omega n} \qquad (5)$$

Die Koeffizienten $a_n$ der Fourier-Reihe gemäß der Formel (5) entsprechen den Filterkoeffizienten $a_i$ zur Formel (1). Dies bedeutet, dass durch Berechnung der Koeffizienten der Fourier-Reihe für eine bestimmte Übertragungsfunktion, die an sich frei wählbar ist, und die gemäß der Formel (4) mit einer Phasenkomponente multipliziert wird, die Filterkoeffizienten der Formel (1) für eine bestimmte Übertragungsfunktion und eine bestimmte Interpolation berechenbar sind. Es lassen sich somit Sätze von Filterkoeffizienten berechnen, deren Anwendung jeweils eine bestimmte Frequenzkorrektur und Interpolation bewirken.

Ziel ist es daher, die $a_n$ so zu bestimmen, dass die Abweichung von $(H_{FIR}-H_{dx}(\omega))$ minimal wird. Diese Übereinstimmung wird für k diskrete Ortsfrequenzen der Übertragungsfunktion H(ω) gefordert.

$$H(\omega_1) = \sum_{n=1}^{m} a_n e^{-i\omega n} \qquad (6)$$

$$H(\omega_2) = \sum_{n=1}^{m} a_n e^{-i\omega n}$$

$$H(\omega_3) = \sum_{n=1}^{m} a_n e^{-i\omega n}$$

$$H(\omega_k) = \sum_{n=1}^{m} a_n e^{-i\omega n}$$

In einer Matrixformulierung mit n = 7 Koeffizienten und k = 9 diskreten Ortsfrequenzen ergibt dies:

$$\begin{bmatrix} e^{-i\omega_1} & e^{-2i\omega_1} & e^{-3i\omega_1} & e^{-4i\omega_1} & e^{-5i\omega_1} & e^{-6i\omega_1} & e^{-7i\omega_1} \\ e^{-i\omega_2} & e^{-2i\omega_2} & e^{-3i\omega_2} & e^{-4i\omega_2} & e^{-5i\omega_2} & e^{-6i\omega_2} & e^{-7i\omega_2} \\ e^{-i\omega_3} & e^{-2i\omega_3} & e^{-3i\omega_3} & e^{-4i\omega_3} & e^{-5i\omega_3} & e^{-6i\omega_3} & e^{-7i\omega_3} \\ e^{-i\omega_4} & e^{-2i\omega_4} & e^{-3i\omega_4} & e^{-4i\omega_4} & e^{-5i\omega_4} & e^{-6i\omega_4} & e^{-7i\omega_4} \\ e^{-i\omega_5} & e^{-2i\omega_5} & e^{-3i\omega_5} & e^{-4i\omega_5} & e^{-5i\omega_5} & e^{-6i\omega_5} & e^{-7i\omega_5} \\ e^{-i\omega_6} & e^{-2i\omega_6} & e^{-3i\omega_6} & e^{-4i\omega_6} & e^{-5i\omega_6} & e^{-6i\omega_6} & e^{-7i\omega_6} \\ e^{-i\omega_7} & e^{-2i\omega_7} & e^{-3i\omega_7} & e^{-4i\omega_7} & e^{-5i\omega_7} & e^{-6i\omega_7} & e^{-7i\omega_7} \\ e^{-i\omega_8} & e^{-2i\omega_8} & e^{-2i\omega_8} & e^{-4i\omega_8} & e^{-5i\omega_8} & e^{-6i\omega_8} & e^{-7i\omega_8} \\ e^{-i\omega_9} & e^{-2i\omega_9} & e^{-3i\omega_9} & e^{-4i\omega_9} & e^{-5i\omega_9} & e^{-6i\omega_9} & e^{-7i\omega_9} \end{bmatrix} * \begin{pmatrix} a_1 \\ a_2 \\ a_3 \\ a_4 \\ a_5 \\ a_6 \\ a_7 \end{pmatrix} \cong \begin{pmatrix} H(\omega_1) \\ H(\omega_2) \\ H(\omega_3) \\ H(\omega_4) \\ H(\omega_5) \\ H(\omega_{61}) \\ H(\omega_7) \\ H(\omega_8) \\ H(\omega_9) \end{pmatrix} \qquad (7)$$

Um den Lösungsvektor $a_n$ zu finden, muss dieses System mit den komplexen Matrixelementen $e^{-i\omega x}$ gelöst werden.

Dies führt zu einem speziellen Problem der linearen Optimierung, das als "Quadratically Constrained Quadratic programm" bekannt ist. Die Koeffizienten ergeben dann eine Übertragungsfunktion, die sich wie Tschebyscheff-Filter verhalten.

Eine Sammlung von Lösungsstrategien ist im CORC Report TR-2002-04 "Robust convex quadratically constrained programs" von Goldfarb D. und Iyengar G. angegeben. Dieser Report ist im Internet erhältlich unter:

http://www.gsb.stanford.edu/facseminars/events/oit/pdfs/Iyengar_Robust.pdf

Nachfolgend wird ein Ausführungsbeispiel eines erfindungsgemäßen FIR-Interpolationsfeldes für n = 7 Koeffizienten und k = 15 diskreten Ortsfrequenzen erläutert.

Die Frequenzkorrektur kann beispielhaft derart ausgestaltet sein, dass eine Überhöhung des Frequenzganges im Bereich der halben Nyquist-Frequenz angestrebt wird. Der Überhöhung wird ein gaussförmiger Verlauf gegeben. Die Überhöhung beträgt zum Beispiel 25 %. Ein idealer Interpolationsfilter hat bei der Nyquist-Frequenz die Verstärkung 0. Der Übergang dazu wird über ein Kaiserfenster erreicht. Die Übertragungsfunktion ergibt sich aus der Kombination dieser Funktionen.

Eine derartige Frequenzkorrektur trägt der Tatsache Rechnung, dass viele optische Systeme höhere Frequenzen, d.h., Kontraste von sehr eng beieinander liegenden Punkten bzw. Linien (feine Kontraste) in der Regel schlechter abbilden als tiefere Frequenzen, d.h., Kontraste von größeren Punkten bzw. breiteren Linien (gröbere Kontraste). Deshalb wird die Verstärkung bis zur halben Nyquist-Frequenz etwas angehoben.

In Figur 2 ist der Verlauf dieser Übertragungsfunktion (Betragsfunktion), mit der die Frequenzkorrektur ausgeführt wird, dargestellt, wobei auf der Abszisse die 15 diskreten Ortsfrequenzen von $\omega$ normiert aufgetragen sind und auf der Ordinate der Verstärkungsfaktor A dargestellt ist. Die diskreten Ortsfrequenzen sind so gewählt, dass der maximale Wert von 15 der Nyquist-Frequenz entspricht, womit das Maximum im Koordinatensystem bei 7,5, der halben Nyquist-Frequenz, dargestellt ist.

Bei anderen optischen Systemen mit anderen optischen Eigenschaften kann es selbstverständlich zweckmäßig sein, die den Frequenzgang korrigierende Übertragungsfunktion anders zu gestalten.

Da die vorgehend erläuterte Übertragungsfunktion lediglich die Frequenzkorrektur beinhaltet, muss sie zum Ausführen der Interpolation noch mit der Phasenkomponente $e^{i a x t x}$ (siehe Formel (4)) multipliziert werden. Hierzu wurden für die 15 diskreten Ortsfrequenzen und für jeweils 10 Verschiebungen von 0 x d, 0,1 x d, 0,2 x d, ..., 0,9 x d die Phasenkomponente berechnet, wobei d der Abstand zweier benachbarter Bildpunkte im Quellbild ist. Somit wurde für jede mögliche Verschiebung im Raster von 0,1 d ein Satz Phasenkomponenten für die 15 diskreten Ortsfrequenzen berechnet und mit der Übertragungsfunktion multipliziert.

Die sich hierbei ergebenden Werte für eine vorbestimmte Verschiebung dx ergeben somit den Vektor $H_{dx}(\omega)$ auf der rechten Seite in der Formel (7).

Für jede der 10 Verschiebungen dx wurde somit ein Gleichungssystem gemäß der Formel (7) aufgestellt.

Mittels dem oben angesprochenen Verfahren zur linearen Optimierung wurden die 10 Gleichungssysteme zur Ermittlung der 10 Lösungsvektoren $a_n$ berechnet. Mittels dieser mehreren Gleichungssysteme für einen jeden Interpolationsschritt lässt sich elegant die Interpolation in die Filterkoeffizienten des im Ortsraum wirkenden FIR-Filters integrieren.

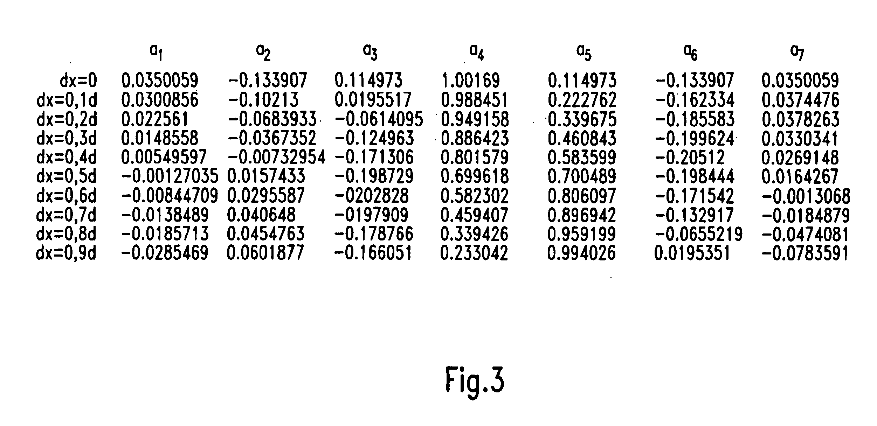

Die sich hierbei ergebenden Werte der Filterkoeffizienten $a_n$ sind in der in Figur 3 dargestellten Tabelle angegeben, wobei in jeder Zeile jeweils 7 Filterkoeffizienten für einen FIR-Filter für eine vorbestimmte Verschiebung dx aufgeführt sind. Gemäß der Formel (1) und der Figur 1 wird bei einer Verschiebung um den Wert dx = 0, also keiner Verschiebung im allgemeinen Sprachgebrauch, mit der Interpolation ein Bildpunkt im Zielbild berechnet, dessen Ort dem Bildpunkt im Quellbild entspricht, der mit dem Koeffizienten $a_4$ multipliziert wird. Wie man anhand der Tabelle aus Figur 3 erkennen kann, ist der Koeffizient $a_4$ bei einer Verschiebung dx = 0 1,00169, so dass dieser Wert aus dem Quellbild sehr stark in den korrespondierenden Wert des Zielbildes eingeht. Bei einer Verschiebung von dx = 0,9 ist der Ort des zu berechnenden Bildpunktes im Zielbild jedoch aufgrund der Verschiebung, des 0,9-fachen des Abstandes zweier benachbarter Bildpunkte von dem Bildpunkt, der mit dem Koeffizienten $a_4$ multipliziert wird in Richtung zu dem Bildpunkt, der mit dem Koeffizienten $a_5$ multipliziert wird, verschoben. Anhand der Tabelle aus Figur 3 erkennt man, dass bei einer Verschiebung von dx = 0,9 d der Koeffizient $a_4$ lediglich 0,233042 und der Koeffizient $a_5$ hingegen 0,994026 beträgt. Das heißt, dass der Bildpunkt, dessen Ort im Quellbild dem entsprechenden Ort im Zielbild näher liegt und mit dem Koeffizienten $a_5$ multipliziert wird, wesentlich stärker in die Berechnung eingeht als der nunmehr weiter weg liegende Bildpunkt, der mit dem Koeffizienten $a_4$ multipliziert wird. Die Koeffizienten $a_4$ verringern sich somit schrittweise mit größerer Verschiebung, womit sich die Koeffizienten $a_5$ in entsprechender Weise mit zunehmender Verschiebung erhöhen. Hieraus kann man die Interpolationswirkung der berechneten Filter anschaulich nachvollziehen.

Da die Filterkoeffizienten, die sowohl die Information zur Frequenzkorrektur als auch zur Interpolation beinhalten, mit vorbezeichnetem Verfahren einfach berechenbar sind, ist es möglich, bei einer bestimmten Anwendung die Übertragungsfunktion zu variieren und dementsprechend unterschiedliche Filterkoeffizienten zu berechnen. Dies ist zum Beispiel dann sinnvoll, wenn ein Zoom-Objektiv verwendet wird, dem bei unterschiedlichen Brennweiten unterschiedliche Übertragungsfunktionen zuzuordnen sind. Demgemäß werden je nach Einstellung der Brennweite Filterkoeffizienten mit einer entsprechend angepassten Übertragungsfunktion berechnet.

Wie es oben erläutert ist, können auch andere den Frequenzgang korrigierende Übertragungsfunktionen verwendet werden. Eine sehr vorteilhafte Übertragungsfunktion wird nachfolgend anhand der Figuren 18a und 18b erläutert.

Da beim Scannen das abzutastende Bild nicht exakt im Fokus des Objektives des Scanners liegt, entsteht eine Unschärfe, die durch folgende Unschärfeübertragungsfunktion h1 ($\omega$) (Figur 18a) beschrieben wird:

$$h1(\omega) = (6{,}00357 \cdot Besselfunktion\ 1.Ordnung\,(0{,}33313 \cdot 16 \cdot x))/(16x) \qquad (8)$$

Da die Bildpunkte eine endliche Größe besitzen, werden bei hohen Frequenzen Unschärfen erzeugt, die durch folgende Aperturübertragungsfunktion h2 ($\omega$) beschrieben werden:

$$h2(\omega) = \frac{\sin(\pi \cdot x)}{\pi \cdot x} \qquad (9)$$

Die gesamte Unschärfe wird durch das Produkt p ($\omega$) aus h1 ($\omega$) und h2($\omega$) beschrieben, das in Figur 18a dargestellt ist.

Die den Frequenzgang korrigierende Übertragungsfunktion würde man im ersten Ansatz als den Kehrwert von dem Produkt p ($\omega$) berechnen. Jedoch würde hierbei insbesondere bei hohem $\omega$ ein erhebliches Rauschen verursacht werden, da diese Funktion enorm ansteigen würde.

Ein optimalerer Filter ist die oben erläuterten Übertragungsfunktionen h1 ($\omega$) und h2 ($\omega$) zur Berechnung eines Wiener Filters heranzuziehen, der folgender Formel entspricht:

$$H(\omega) = \frac{h1(\omega)^2 \cdot p(\omega)}{h1(\omega)^2 \cdot p(\omega)^2 + 0{,}04} \qquad (10)$$

Diese den Frequenzgang korrigierende Übertragungsfunktion ist in Figur 18b gezeigt und kann gleichermaßen wie die in Figur 2 gezeigte Übertragungsfunktion zur Erzeugung der Filterkoeffizienten des erfindungsgemäßen FIR-Filters verwendet werden. In den Figuren 18a, 18b sind die Übertragungsfunktionen auf die maximale Wellenzahl des Systems normiert, wobei 0,5 der Nyquistfrequenz entspricht.

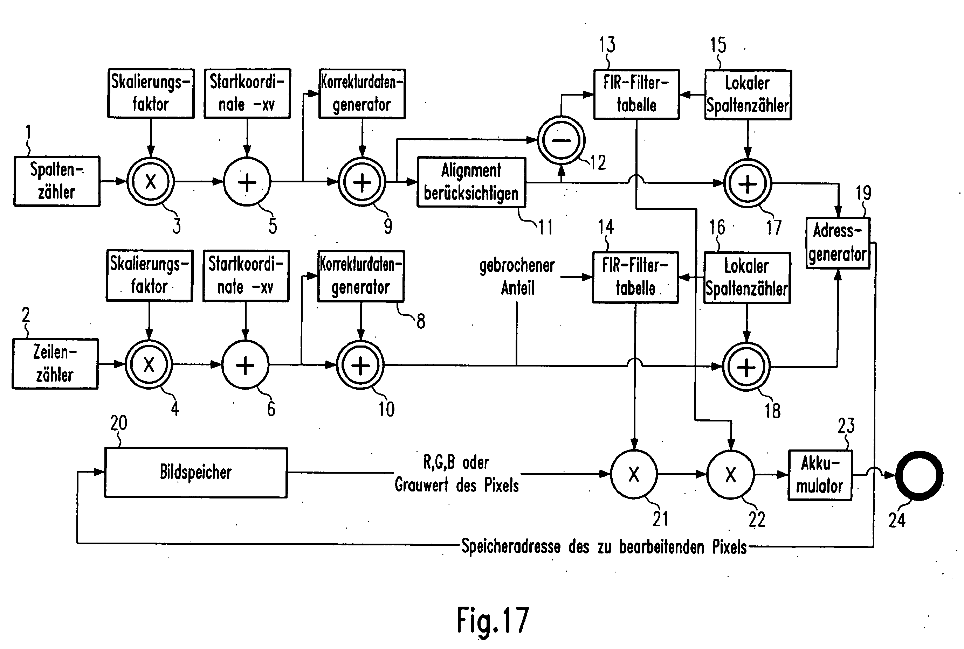

In Figur 17 ist in einem Blockschaltbild eine Vorrichtung zum Ausführen des erfindungsgemäßen Verfahrens schematisch dargestellt.

Diese Vorrichtung weist einen Spaltenzähler 1 und einen Zeilenzähler 2 auf. Der Spaltenzähler 1 zählt die Spalten im Zielbild und der Zeilenzähler 2 zählt die Zeilen im Zielbild. Wenn der Spaltenzähler 1 einmal alle Spalten im Zielbild durchgezählt hat, dann zählt der Zeilenzähler um eine Zeile weiter. Somit werden die Bildpunkte des Zielbildes zeilenweise aufeinander folgend durchgezählt. Diese beiden Zähler 1, 2 geben somit vor, für welchen Bildpunkt im Zielbild die Abbildung aus dem Quellbild ausgeführt werden soll.

Dem Spaltenzähler 1 und dem Zeilenzähler 2 ist jeweils ein Multiplikator 3, 4 nachgeschaltet, mit welchem die Spaltenzahl bzw. die Zeilenzahl mit einem korrespondierenden Skalierungsfaktor multipliziert werden. Der Skalierungsfaktor stellt die Schrittweite im Quellbild dar, so dass der Abstand zweier Bildpunkte im Zielbild, d. h. der Abstand zwischen zwei benachbarten Spalten bzw. Zeilen, auf das Quellbild in der Einheit des Abstandes zweier benachbarter Bildpunkte im Quellbild abgebildet wird.

Den Multiplikatoren 3, 4 sind jeweils Addierer 5, 6 nachgeschaltet, die zu der jeweiligen Spalten- bzw. Zeilenzahl jeweils eine Startkoordinate hinzu addieren. Mit dieser Startkoordinate wird zum einen der Bildausschnitt im Quellbild festgelegt, der auf das Zielbild abgebildet werden soll. Zum anderen zentriert die Startkoordinate den FIR-Filter um den jeweiligen Bildpunkt im Quellbild, was unten näher erläutert wird.

Die derart korrigierten Spalten- und Zeilenzahlen werden jeweils einem Korrekturdatengenerator 7, 8 und einem Addierer 9, 10 zugeführt. Die Korrekturdatengeneratoren 7, 8 berechnen anhand einer vorgegebenen Funktion oder einer Look-up-Tabelle aus der zugeführten Spalten- und Zeilenzahl einen Korrekturwert, der z.B. den Verzeichnungsfehler korrigiert, der bei der Erzeugung des Quellbildes durch Verwendung einer bestimmten Optik hervor gerufen wird. Dieser Korrekturwert wird dem jeweiligen Addierer 9, 10 zugeführt und mit der entsprechenden Spalten- bzw. Zeilenzahl addiert. Die derart erhaltene Spalten- und Zeilenzahl gibt die Koordinate im Quellbild an, ab der der oben erläuterte FIR-Filter zur Berechnung des Bildpunktes des Zielbildes mit den vom Spaltenzähler 1 und Zeilenzähler 2 vorgegebenen Spalten- und Zeilenzahl berechnen kann

Dem Addierer 9 folgt ein Element zur Alignment-Korrektur 11 und in einer Abzweigung ein Subtrahierer 12. Das Element zur Alignment-Korrektur 11 und der Subtrahierer 12 werden zunächst bei der Erläuterung der erfindungsgemäßen Vorrichtung nicht berücksichtigt. Über diese Abzweigung, die zu einer FIR-Filtertabelle 13 führt, wird der FIR-Filtertabelle 13 der gebrochene Anteil der Spaltenzahl zugeführt.

Dem Addierer 10 ist in entsprechender Weise eine FIR-Filtertabelle 14 nachgeordnet, der der gebrochene Anteil der Zeilenzahl zugeführt wird. Der ganzzahlige Anteil der Spaltenzahl bzw. der Zeilenzahl werden einem Addierer 17 bzw. 18 zugeführt. Zwischen den Addierern 17, 18 und den FIR-Filtertabellen 13, 14 ist jeweils ein lokaler Spaltenzähler 15 bzw. ein lokaler Zeilenzähler 16 zwischengeschaltet. Beim Anlegen einer bestimmten Spalten- bzw. Zeilenzahl an die Addierer 17, 18 zählen der lokale Spaltenzähler 15 und der lokale Zeilenzähler 16 jeweils von 0 bis n-1, wobei n die Anzahl der Filterkoeffizienten ist. Die Zählerzahl i des lokalen Spaltenzählers 15 wird an die FIR-Filtertabelle 13 weitergegeben, und demgemäß (i + 1-ter Filterwert) wird aus dem zweiten gebrochenen Anteil korrespondierender Filter der entsprechende Filterwert ausgewählt. In entsprechender Weise werden bei der FIR-Filtertabelle 14 die Filterwerte in Abhängigkeit des gebrochenen Anteils und des Zählerwertes des lokalen Zeilenzählers 16 ausgewählt. Der Zählerwert des lokalen Spaltenzählers 15 wird am Addierer 17 der ganzzahligen Spaltenzahl hinzu addiert, wodurch die dem korrespondierenden Filterwerte entsprechende Spaltenzahl berechnet wird. In entsprechender Weise wird der Zählerwert des lokalen Zeilenzählers 16 der dem Addierer 18 zugeführten ganzzahligen Zeilenzahl hinzugefügt. Jeweils ein Ausgangswert des Addierers 17 (Spaltenzahl) und ein Ausgangswert des Addierers 18 (Zeilenzahl) bilden ein Koordinatenpaar, das einem Adressgenerator 19 zugeführt wird. Im Adressgenerator 19 werden diese Koordinaten in korrespondierende Adressdaten umgesetzt, die die Adresse in einem Bildspeicher 20 angeben. Der Bildspeicher 20 enthält die Daten des Quellbildes und die vom Adressgenerator 19 erzeugten Adressen enthalten im Bildspeicher die Daten des Quellbildes, die den dem Adressgenerator 19 zugeführten Koordinatenpaaren entsprechen. Aus dem Bildspeicher werden dann die entsprechenden Werte ausgelesen, zunächst an einem ersten Multiplizierer 21 mit den Filterwerten aus der FIR-Filtertabelle 14 und dann an einem zweiten Multiplizierer 22 mit den Filterwerten aus der FIR-Filtertabelle 13 multipliziert. Zum Berechnen eines Bildpunktes wird der lokale Spaltenzähler 15 für einen jeden Schritt im lokalen Zeilenzähler 16 einmal durchlaufen, das heißt, dass nach jedem Durchlauf des lokalen Spaltenzählers 15 der lokale Zeilenzähler 16 um eins erhöht wird, Die hierbei ermittelten Werte werden in einem Akkumulator 23 aufsummiert und dann als Wert des Bildpunktes im Zielbild ausgegeben, der durch die vom Spaltenzähler 1 vorgegebene Spaltenzahl und die vom Zeilenzähler 2 vorgegebene Zeilenzahl definiert ist.

Nach Ausgabe eines entsprechenden Bildwertes wird der Spaltenzähler um 1 erhöht und ein erneuter Bildwert berechnet, wobei der lokale Spaltenzähler 15 und der lokale Zeilenzähler 16 einmal ihren Wertebereich durchlaufen.

Ist der Spaltenzähler an der letzten Spalte angelangt, so wird er wieder auf 0 gesetzt und beginnt bei der ersten Spalte und der Zeilenzähler wird um 1 erhöht. Sind sowohl der Spaltenzähler als auch der Zeilenzähler an ihren Maximalwerten angelangt, so ist das vollständige Zielbild berechnet.

Da FIR-Filter separierbar sind, können die erfindungsgemäßen Filterberechnungen gleichzeitig sowohl in Spalten- als auch in Zeilenrichtung ausgeführt und durch aufeinander folgendes Multiplizieren am ersten und zweiten Multiplizierer 21, 22 überlagert werden.

Mit dem oben erläuterten Element zur Alignment-Korrektur kann die Eigenschaft von Rechnern ausgenutzt werden, dass sie in der Regel mit 32 Bit umfassenden Datenwörtern arbeiten obwohl nur 8 Bit zur Beschreibung eines Bildpunktes benötigt werden. Mit dem Lesen eines Datenwortes können somit die Werte von vier Bildpunkten mit einem Zugriff geholt werden. Das Element zur Alignment-Korrektur berücksichtigt dies und setzt die Spaltenzahl derart, dass am Adressgenerator 19 die nächst kleinere durch 4 teilbare Adresse anliegt. Diese Abrundung hat die Wirkung einer Verschiebung nach links.

Diese Verschiebung könnte durch eine entsprechende Multiplexereinrichtung wieder rückgängig gemacht werden, die diese Verschiebung wieder ausgleicht. Eleganter ist es jedoch, diese ganzzeilige Verschiebung gemeinsam mit der Subbildpunktverschiebung im Filter zu bearbeiten und mit der ohnehin vorhandenen FIR-Filtertabelle zu kompensieren. Hierzu erzeugt der Differenzierer 12 die Differenz zwischen der am Adressengenerator 19 anliegenden Spaltenzahl und der vom Addierer 9 ausgegebenen Spaltenzahl. Die Differenz ergibt dann die Summe einer ganzzahligen Verschiebung und der durch den gebrochenen Anteil gebildeten Subbildpunktverschiebung. Mit dem Filter wird somit nicht nur die Subbildpunktverschiebung sondern auch die Verschiebung um mehrere Bildpunkte entsprechend der Abrundung der Speicherzugriffsadresse ausgeführt.

Die oben an Hand von Figur 17 beschriebene Vorrichtung ist eine Hardware-Schaltung zum Abbilden eines Quellbildes auf ein Zielbild. Diese Hardware-Schaltung ist aus einfachen Standardkomponenten ausgebildet, weshalb sie kostengünstig herstellbar ist. Sie erlaubt zudem eine sehr schnelle Abbildung des Quellbildes auf das Zielbild.

Die Erfindung kann selbstverständlich auch durch ein Datenverarbeitungsprogramm realisiert werden, dass auf einem entsprechenden Mikroprozessor zur Ausführung gebracht wird.

Das erfindungsgemäße Verfahren ist zur Anwendung in einem Scanner, insbesondere einem Hochleistungsscanner, vorgesehen, mit welchem bis zu 100 Blatt DIN A4 pro Minute abgetastet, interpoliert und entsprechende Übertragungsfunktionen korrigiert werden können.

Das erfindungsgemäße Prinzip kann auch auf anderen Anwendungsgebieten, wie zum Beispiel bei digitalen Photoapparaten eingesetzt werden.

Die Erfindung kann folgendermaßen kurz zusammengefasst werden:

Die Erfindung betrifft eine Verfahren und eine Vorrichtung zur Interpolation und Korrektur eines digitalen Bildes. Ein Quellbild wird hierbei auf ein Zielbild mit einem FIR-Filter abgebildet, der mehrere Filterkoeffizienten umfasst. Die Filterkoeffizienten enthalten sowohl die Information zur Interpolation als auch zur Korrektur des Bildes, so dass in einem einzigen Arbeitsschritt sowohl die Interpolation, als auch die Korrektur ausgeführt wird.

Das erfindungsgemäße Verfahren zur Abbildung des Quellbildes auf das Zielbild kann einfach mit einer Hardware-Schaltung realisiert werden, so dass die Abbildung in einer Vorrichtung, insbesondere in einem Scanner, ohne Verzögerung des gesamten Prozessablaufes ausgeführt werden.

Bezugzeichenliste

| | |
|---|---|
| 1 | Spaltenzähler |
| 2 | Zeilenzähler |
| 3 | Multiplikator |
| 4 | Multiplikator |
| 5 | Addierer |
| 6 | Addierer |
| 7 | Korrekturdatengenerator |
| 8 | Korrekturdatengenerator |
| 9 | Addierer |
| 10 | Addierer |
| 11 | Element zur Alignment-Korrektur |
| 12 | Subtrahierer |
| 13 | FIR-Filtertabelle |
| 14 | FIR-Filtertabelle |
| 15 | Lokaler Spaltenzähler |
| 16 | Lokaler Spaltenzähler |
| 17 | Addierer |

18 Addierer
19 Adressgenerator
20 Bildspeicher
21 Erster Multiplizierer
22 Zweiter Multiplizierer
23 Akkumulator
24 Ausgabe

**Patentansprüche**

1. Verfahren zur Interpolation und Korrektur eines digitalen Bildes, wobei ein Quellbild auf ein Zielbild mit einem FIR-Filter, der mehrere Filterkoeffizienten umfasst, abgebildet wird, **dadurch gekennzeichnet, daß** die Filterkoeffiziten sowohl die Information zur Interpolation als auch zur Korrektur des Bildes enthalten, so dass in einem einzigen Schritt sowohl die Interpolation als auch die Korrektur des Bildes ausgeführt werden.

2. Verfahren nach Anspruch 1,
**dadurch gekennzeichnet,**
**dass** vor der Abbildung des Quellbildes auf das Zielbild n Filterkoeffizienten mit k diskreten Ortsfrequenzen gemäß folgender Formel berechnet werden:

$$\begin{bmatrix} e^{-i\omega_1} & e^{-2i\omega_1} & \bullet & \bullet & \bullet & e^{-ni\omega_1} \\ e^{-i\omega_2} & e^{-2i\omega_2} & & & & e^{-ni\omega_2} \\ \bullet & & \bullet & & \bullet & \bullet \\ \bullet & & & \bullet & \bullet & \bullet \\ \bullet & & & \bullet & \bullet & \bullet \\ & & \bullet & & \bullet & \\ e^{-i\omega_k} & e^{-2i\omega_k} & \bullet & \bullet & \bullet & e^{-ni\omega_k} \end{bmatrix} * \begin{pmatrix} a_1 \\ a_2 \\ \bullet \\ \bullet \\ \bullet \\ a_n \end{pmatrix} \cong \begin{pmatrix} H(\omega_1) \\ H(\omega_2) \\ \bullet \\ \bullet \\ \bullet \\ H(\omega_k) \end{pmatrix}$$

wobei $a_1$ bis $a_n$ die Filterkoeffizienten sind und $H(\omega_e)$ die Übertragungsfunktion multipliziert mit einer Phasenkomponente für die jeweilige Ortsfrequenz $\omega_i$ ist.

3. Verfahren nach Anspruch 2,
**dadurch gekennzeichnet,**
**dass** mehrere Sätze Filterkoeffizienten für jeweils eine vorbestimmte Verschiebung berechnet werden.

4. Verfahren nach Anspruch 3,
**dadurch gekennzeichnet,**
**dass** die vorbestimmten Verschiebungen, für welche jeweils ein Satz Filterkoeffizienten berechnet wird, alle Verschiebungen zwischen 0 und dem Abstand zweier benachbarter Pixel im Quellbild sowie gleichmäßig beabstandete Zwischenschritte umfassen.

5. Verfahren nach einem der Ansprüche 2 bis 4,
**dadurch gekennzeichnet,**
**dass** eine Übertragungsfunktion verwendet wird, deren Frequenzgang im Bereich der halben Nyquist-Frequenz erhöht ist.

6. Verfahren nach Anspruch 5
**dadurch gekennzeichnet,**

**dass** die Überhöhung zwar einen gaußförmigen Verlauf aufweist und 15 bis 30% beträgt.

7.  Verfahren nach einem der Ansprüche 1 bis 6
    **dadurch gekennzeichnet,**
    **dass** es in einer optischen Abtasteinrichtung eingesetzt wird, die ein Objektiv zum optischen Abtasten einer Vorlage aufweist, wobei die Übertragungsfunktionen in Abhängigkeit der Einstellung des Objektives variiert wird.

8.  Vorrichtung zum Ausführen des Verfahrens nach einem der Ansprüche 1 bis 7
    umfassend

    - Mittel zum Berechnen der Filterkoeffizienten
    - Mittel zum Abbilden eines Quellbildes auf ein Zielbild gemäß dem Verfahren nach einem der Ansprüche 1 bis 7.

9.  Vorrichtung nach Anspruch 8,
    **dadurch gekennzeichnet,**
    **dass** die Mittel zum Abbilden des Quellbildes auf das Zielbild als Hardwareschaltung ausgebildet sind umfassend

    - einen Spaltenzähler (1), dem ein Multiplizierer (3) zum Multiplizieren der Spaltenzahl mit einem Scalierungsfaktor nachgeschaltet ist,
    - einen Zeilenzähler (2), dem ein Multiplizierer (4) zum Multiplizieren mit einem Scalierungsfaktor nachgeschaltet ist,
    - Korrekturmittel für die Spaltenzahl und Zeilenzahl (5, 6, 7, 8, 9 10),
    - eine der Spaltenzahl zugeordnete FIR-Filtertabelle (13),
    - eine der Zeilenzahl zugeordnete FIR-Filtertabelle (14),
    - einen lokalen Spaltenzähler (15), anhand dessen Wert der entsprechende Filterkoeffizient aus der FIR-Filtertabelle (13) ausgelesen wird und dessen Wert der Spaltenzahl mittels eines Addierers (17) hinzu addiert wird,
    - einen lokalen Zeilenzähler (16) anhand dessen Wert der Filterkoeffizient der FIR-Filtertabelle (14) ausgelesen wird und dessen Wert der Zeilenzahl mittels eines Addierers (18) hinzu gezählt wird,
    - einen Adressgenerator, der an Hand der korrigierten und durch den lokalen Spaltenzähler beziehungsweise lokalen Zeilenzähler ergänzten Spalten-/Zeilenzahl eine Adresse für den Bildspeicher (20) erzeugt, in dem das Quellbild gespeichert ist,
    - zwei Multiplizierer (21, 22), die den Wert des durch den Adressgenerator erzeugten Adresse vorgegebenen Bildpunktes mit den Filterkoeffizienten multipliziert, und
    - einen Akkumulator (23), der alle mit den Filterkoeffizienten multiplizierten Bildwerte für den Durchlauf des lokalen Spaltenzählers für einen jeden Wert des lokalen Zeilenzählers aufsummiert.

10. Vorrichtung nach Anspruch 8,
    **dadurch gekennzeichnet,**
    **dass** die Vorrichtung einen Mikroprozessor aufweist, in dem ein Datenverarbeitungsprogramm zum Ausführen des Verfahrens nach einem der Ansprüche 1 bis 7 gespeichert und ausführbar ist.

11. Vorrichtung nach Anspruch 8, 9,
    **dadurch gekennzeichnet,**
    **dass** die Vorrichtung einen Mikroprozessor aufweist und ein Datenverarbeitungsprogramm zum Berechnen der Filterkoeffizienten gespeichert und ausführbar ist.

12. Scanner mit einer Vorrichtung nach einem der Ansprüche 8 bis 11.

**Claims**

1.  A method for the interpolation and correction of a digital image, wherein a source image is mapped to a target image with a FIR filter that comprises a plurality of filter coefficients, **characterized in that** the filter coefficients comprise both the information for interpolation and that for correction of the image so that both the interpolation and the correction of the image are executed in a single step.

2.  The method according to claim 1,
    **characterized in that**

before the mapping of the source image onto the target image n filter coefficients with k discrete spatial frequencies are calculated according to the following formula:

$$\begin{bmatrix} e^{-i\omega_1} & e^{-2i\omega_1} & \bullet & \bullet & \bullet & e^{-ni\omega_1} \\ e^{-i\omega_2} & e^{-2i\omega_2} & & & & e^{-ni\omega_2} \\ \bullet & & \bullet & & \bullet & \bullet \\ \bullet & & & \bullet & \bullet & \bullet \\ \bullet & & & \bullet & \bullet & \bullet \\ & & \bullet & & \bullet & \\ e^{-i\omega_k} & e^{-2i\omega_k} & \bullet & \bullet & \bullet & e^{-ni\omega_k} \end{bmatrix} * \begin{pmatrix} a_1 \\ a_2 \\ \bullet \\ \bullet \\ \bullet \\ a_n \end{pmatrix} \cong \begin{pmatrix} H(\omega_1) \\ H(\omega_2) \\ \bullet \\ \bullet \\ \bullet \\ H(\omega_k) \end{pmatrix}$$

wherein $a_1$ to $a_n$ are the filter coefficients and $H(\omega_e)$ is the transfer function multiplied with a phase component for the respective spatial frequency $\omega_1$.

**3.** The method according to claim 2,
**characterized in that**
a plurality of sets of filter coefficients are calculated for one respective predetermined shift.

**4.** The method according to claim 3,
**characterized in that**
the predetermined shifts for which respectively one set of filter coefficients is calculated comprise all shifts between 0 and the separation of two adjacent pixels in the source image as well as uniformly spaced intermediate steps.

**5.** The method according to one of the preceding claims 2 to 4,
**characterized in that**
a transfer function is used whose frequency response is increased in the range of half of the Nyquist frequency.

**6.** The method according to claim 5,
**characterized in that**
the superelevation does in fact exhibit a Gaussian curve and amounts to 15 to 30%.

**7.** The method according to one of the claims 1 to 6, **characterized in that**
it is used in an optical scanning device that comprises an objective for optical scanning of a document, wherein the transfer function is varied dependent on the setting of the objective.

**8.** A device for execution of the method according to one of the claims 1 to 7,
comprising

- means for calculation of the filter coefficients
- means for mapping of a source image to a target image according to the method according to one of the claims 1 to 7.

**9.** The method according to claim 8,
**characterized in that**
the means for mapping the source image to the target image are designed as a hardware circuit,
comprising

- a column counter (1), downstream of which is a multiplier (3) for multiplication of the column number with a scaling factor,
- a row counter (2), downstream of which is a multiplier (4) for multiplication with a scaling factor,
- correction means for the column number and row number (5, 6, 7, 8, 9, 10),
- a FIR filter table (13) associated with the column number,
- a FIR filter table (14) associated with the row number,
- a local column counter (15), on the basis of which value the corresponding filter coefficient is read out from the FIR filter table (13) and whose value is added to the column number by means of an adder (17),
- a local row counter (16), on the basis of which value the filter coefficient is read out from the FIR filter table (14) and whose value is added to the row number by means of an adder (18),
- an address generator that generates an address for the image memory (20) using the column/row number corrected and supplemented by the local column counter or, respectively, local row counter, at which address the source image is stored,
- two multipliers (21, 22) that multiply the value of the image point predetermined by the address generated by the address generator with the filter coefficients, and
- an accumulator (23) that adds up all image values multiplied with the filter coefficients for the pass of the local column counter for each value of the local row counter.

10. The device according to claim 8,
    **characterized in that**
    the device comprises a microprocessor in which a data processing program for execution of the method according to one of the claims 1 to 7 is stored and can be executed.

11. The device according to claim 8, 9,
    **characterized in that**
    the device comprises a microprocessor and a data processing program for calculation of the filter coefficients is stored and can be executed.

12. A scanner with a device according to one of the claims 8 to 11.

**Revendications**

1. Procédé d'interpolation et de correction d'une image numérique, dans lequel une image source est appliquée sur image cible au moyen d'un filtre FIR qui comporte plusieurs coefficients de filtre, **caractérisé en ce que** les coefficients de filtre contiennent l'information d'interpolation ainsi que de correction de l'image de sorte que l'interpolation et la correction de l'image sont effectuées en une seule étape.

2. Procédé selon la revendication 1, **caractérisé en ce que**, avant d'appliquer l'image source sur l'image cible, on calcule n coefficients de filtre avec k fréquences locales discrètes selon la formule suivante :

$$
\begin{bmatrix}
e^{-i\omega_1} & e^{-2i\omega_1} & \bullet & \bullet & \bullet & e^{-ni\omega_1} \\
e^{-i\omega_2} & e^{-2i\omega_2} & & & & e^{-ni\omega_2} \\
\bullet & & \bullet & & \bullet & \bullet \\
\bullet & & & \bullet & \bullet & \bullet \\
\bullet & & & \bullet & \bullet & \bullet \\
& & \bullet & & \bullet & \\
e^{-i\omega_k} & e^{-2i\omega_k} & & & & e^{-ni\omega_k}
\end{bmatrix}
*
\begin{bmatrix}
a_1 \\ a_2 \\ \bullet \\ \bullet \\ \bullet \\ \\ a_n
\end{bmatrix}
\cong
\begin{bmatrix}
H(\omega_1) \\ H(\omega_2) \\ \bullet \\ \bullet \\ \bullet \\ H(\omega_k)
\end{bmatrix}
$$

où $a_1$ à $a_n$ sont les coefficients de filtre et H ($\omega_e$) sont les fonctions de transfert multipliées par les composantes de phase pour la fréquence locale correspondante $\omega_i$.

3. Procédé selon la revendication 2, **caractérisé en ce que** l'on calcule plusieurs ensembles de coefficients de filtre pour chaque déplacement prédéterminé.

4. Procédé selon la revendication 3, **caractérisé en ce que** les déplacements prédéterminés, pour chacun desquels on calcule un ensemble de coefficients de filtre, comportent tous les déplacements entre 0 et la distance entre deux pixels adjacents dans l'image source ainsi que des pas intermédiaires équidistants.

5. Procédé selon l'une des revendications 2 à 4, **caractérisé en ce que** l'on utilise une fonction de transfert dont la réponse fréquentielle est augmentée de l'ordre de la moitié de la fréquence de Nyquist.

6. Procédé selon la revendication 5, **caractérisé en ce que** la surélévation a une allure gaussienne et est de 15 à 30%.

7. Procédé selon l'une des revendications 1 à 6, **caractérisé en ce qu'**il est utilisé dans un dispositif de balayage optique qui comporte un objectif destiné au balayage optique d'un modèle, les fonctions de transfert étant modifiées en fonction du réglage de l'objectif.

8. Dispositif destiné à mettre en oeuvre le procédé selon l'une des revendications 1 à 7, ledit dispositif comportant

   - des moyens de calcul des coefficients de filtre,
   - des moyens d'application d'une image source sur une image cible conformément au procédé selon l'une des revendications 1 à 7.

9. Dispositif selon la revendication 8, **caractérisé en ce que** les moyens d'application de l'image source sur l'image cible sont conformés en circuit matériel comportant

   - un compteur de colonnes (1) en aval duquel est monté un multiplicateur (3) destiné à multiplier le nombre de colonnes par un facteur de cadrage,
   - un compteur de lignes (2) en aval duquel est monté un multiplicateur (4) destiné à multiplier le nombre de lignes par un facteur de cadrage,
   - des moyens de correction du nombre de colonnes et du nombre de lignes (5, 6, 7, 8, 9, 10),
   - une table de filtres FIR (13) associée au nombre de colonnes,
   - une table de filtres FIR (14) associée au nombre de lignes,
   - un compteur de colonnes local (15) dont la valeur permet de lire le coefficient de filtre correspondant dans la table de filtres FIR (13) et dont la valeur est ajoutée au nombre de colonnes au moyen d'un additionneur (17),
   - un compteur de lignes local (16) dont la valeur permet de lire le coefficient de filtre correspondant dans la table de filtres FIR (14) et dont la valeur est ajoutée au nombre de lignes au moyen d'un additionneur (18),
   - un générateur d'adresses qui génère; en se fondant sur le nombre de colonnes/lignes incrémenté par le compteur de colonnes local respectivement le compteur de lignes local, une adresse pour la mémoire d'image (20) dans laquelle est mémorisée l'image source,
   - deux multiplicateurs (21, 22) qui multiplie la valeur du point d'image, prescrit par l'adresse générée par le générateur d'adresses, par les coefficients de filtre, et
   - un accumulateur (23) qui additionne toutes les valeurs d'image, multipliées par les coefficients de filtre, pour le défilement du compteur de colonnes local pour chaque valeur du compteur de lignes local.

10. Dispositif selon la revendication 8, **caractérisé en ce que** le dispositif comporte un microprocesseur dans lequel un programme de traitement de données est mémorisé et exécutable pour mettre en oeuvre le procédé selon l'une des revendications 1 à 7.

11. Dispositif selon la revendication 8, 9, **caractérisé en ce que** le dispositif comporte un microprocesseur et un programme de traitement de données est mémorisé et exécutable pour calculer les coefficients de filtre.

12. Scanner comportant un dispositif selon l'une des revendications 8 à 11.

n

m

$*$

$\boxed{a_1}\boxed{a_2}\boxed{a_3}$ $=$

n-1 n n+1

m $\quad\boxed{a_1}\boxed{a_2}\boxed{a_3}$

## Fig.1

A

1.4
1.2
1
0.8
0.6
0.4
0.2

2    4    6    8    10   12   14    ω

## Fig.2

| | $a_1$ | $a_2$ | $a_3$ | $a_4$ | $a_5$ | $a_6$ | $a_7$ |
|---|---|---|---|---|---|---|---|
| dx=0 | 0.0350059 | −0.133907 | 0.114973 | 1.00169 | 0.114973 | −0.133907 | 0.0350059 |
| dx=0,1d | 0.0300856 | −0.10213 | 0.0195517 | 0.988451 | 0.222762 | −0.162334 | 0.0374476 |
| dx=0,2d | 0.022561 | −0.0683933 | −0.0614095 | 0.949158 | 0.339675 | −0.185583 | 0.0378263 |
| dx=0,3d | 0.0148558 | −0.0367352 | −0.124963 | 0.886423 | 0.460843 | −0.199624 | 0.0330341 |
| dx=0,4d | 0.00549597 | −0.00732954 | −0.171306 | 0.801579 | 0.583599 | −0.20512 | 0.0269148 |
| dx=0,5d | −0.00127035 | 0.0157433 | −0.198729 | 0.699618 | 0.700489 | −0.198444 | 0.0164267 |
| dx=0,6d | −0.00844709 | 0.0295587 | −0202828 | 0.582302 | 0.806097 | −0.171542 | −0.0013068 |
| dx=0,7d | −0.0138489 | 0.040648 | −0197909 | 0.459407 | 0.896942 | −0.132917 | −0.0184879 |
| dx=0,8d | −0.0185713 | 0.0454763 | −0.178766 | 0.339426 | 0.959199 | −0.0655219 | −0.0474081 |
| dx=0,9d | −0.0285469 | 0.0601877 | −0.166051 | 0.233042 | 0.994026 | 0.0195351 | −0.0783591 |

Fig.3

EP 1 747 533 B1

Fig.4

Fig.5

Fig.6

Fig.7

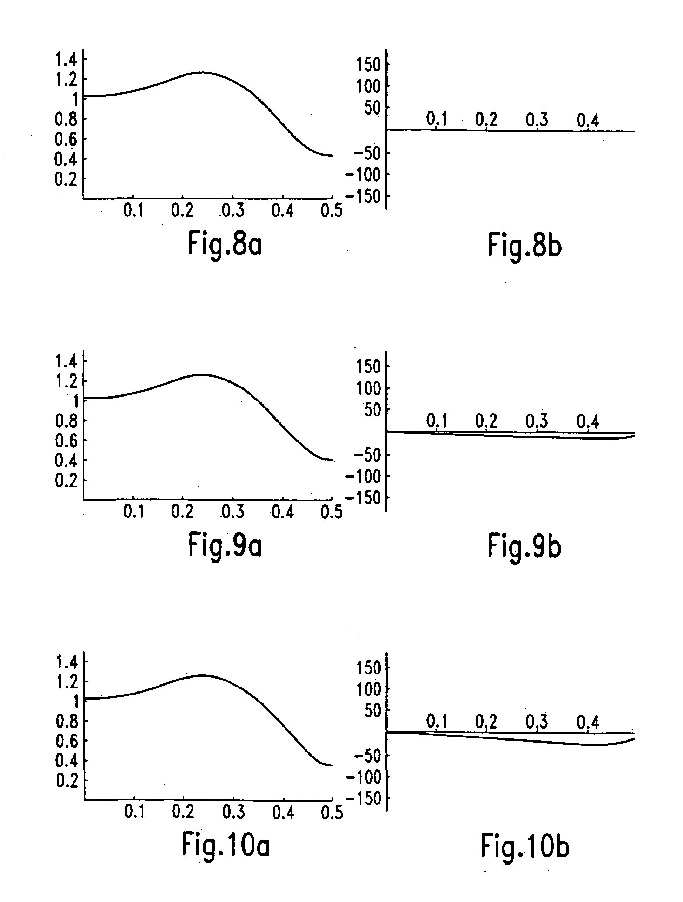

**Fig.8a**

**Fig.8b**

**Fig.9a**

**Fig.9b**

**Fig.10a**

**Fig.10b**

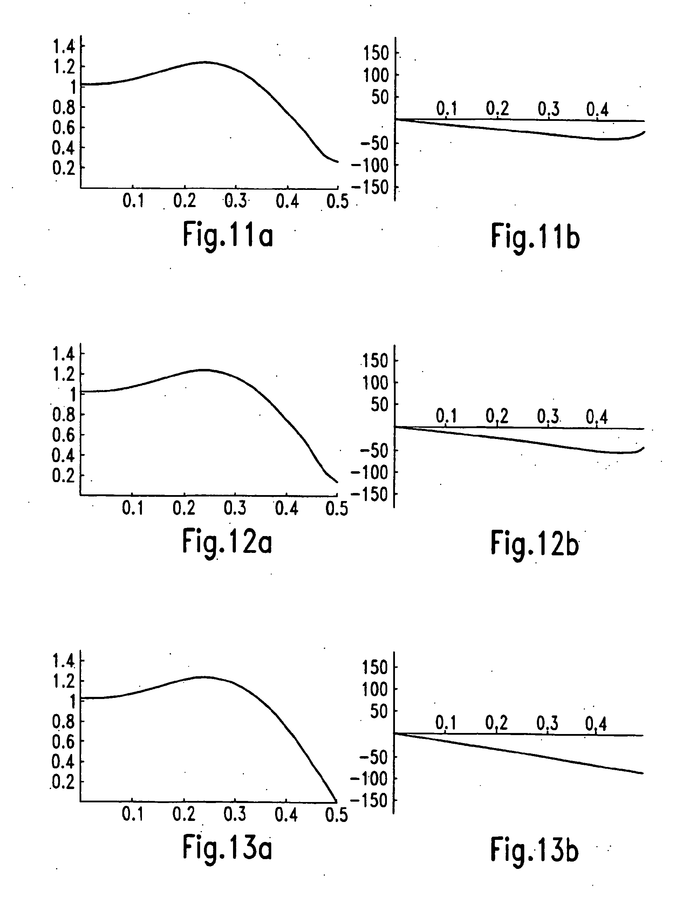

Fig.11a

Fig.11b

Fig.12a

Fig.12b

Fig.13a

Fig.13b

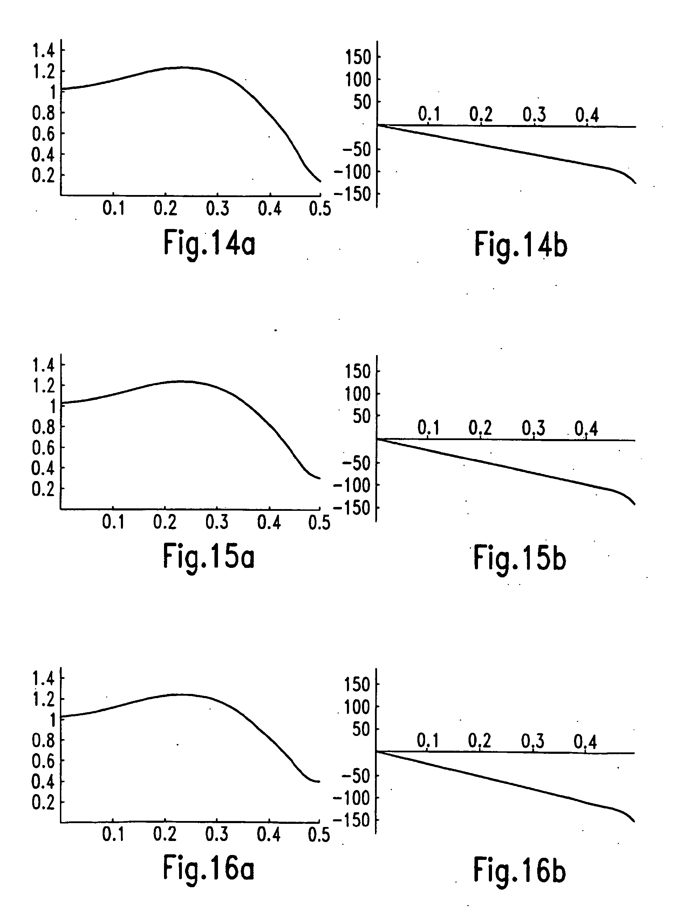

**Fig.14a**

**Fig.14b**

**Fig.15a**

**Fig.15b**

**Fig.16a**

**Fig.16b**

Fig.17

EP 1 747 533 B1

Fig.18a

Fig.18b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5301266 A

- EP 1041510 A2

**In der Beschreibung aufgeführte Nicht-Patentliteratur**

- **COURMONTAGEN, P. ; CAVASSILAS, J.F.** An interpolationfiltering method for noise-corrupted images. *Digital Signal Processing,* 1997, vol. 2, 1091-1094

- **Goldfarb D. ; Iyengar G.** Robust convex quadratically constrained programs. *CORC Report TR-2002-04,* April 2002